# EUROPÄISCHE PATENTANMELDUNG

(11) **EP 1 304 793 A2**
(43) Veröffentlichungstag der Anmeldung: **23.04.2003**
(21) Anmeldenummer: 02023194.0
(22) Anmeldetag: 16.10.2002
(51) Int. Cl.: H02P 7/285

(54) **Spannungsversorgung für Möbelantrieb**

(30) Priorität: 19.10.2001 DE 20116995 U
(71) Anmelder: Okin Gesellschaft für Antriebstechnik MbH & Co. KG, 51645 Gummersbach (DE)
(72) Erfinder: Bellingroth, Klaus, 51645 Gummersbach (DE)
(74) Vertreter: Stachow, Ernst-Walther, Prof. Dr.

(57) **Zusammenfassung**

Eine Spannungsversorgung zum Betrieb mindestens eines einem Antrieb für Möbel zugeordneten Gleichstrommotors, die ein Netzteil aufweist, umfasst einen elektronischen Baustein, der die Spannungsabgabe des Netzteils so regelt, dass seitens des Antriebs lastunabhängig eine gleichförmige Bewegung erzeugbar ist.

## Beschreibung

Die Erfindung betrifft eine Spannungsversorgungsvorrichtung zum Betrieb mindestens eines einem Antrieb für Möbel zugeordneten Gleichstrommotors, die ein Netzteil aufweist.

Moderne Sitz- und Liegemöbel wie Sessel oder Betten, aber auch Tische weisen hinsichtlich ihres Standes sowie ihrer Stütz- und Ablageflächen in zunehmendem Maße mit Antrieben versehene Verstellmöglichkeiten zur Anpassung des betreffenden Möbels an die jeweils gewünschte Lage bzw. Position auf. Um ein einfaches und definiertes Positionieren beispielsweise von Liegeflächen eines Bettes zu gewährleisten, und es dem Benutzer u.a. auch zu ermöglichen, in seiner gegenwärtigen Lage zu verbleiben, kommen dabei z.B. durch einen Gleichstrommotor angetriebene Linearantriebe zum Einsatz. Bei der Versorgung solcher Antriebssysteme kommen bisher 50/60 Hz-Transformatoren mit nachgeschalteter Gleichrichtung und Glättung zum Einsatz.

Werden bei derartigen Lageänderungen besondere Anforderungen an die Gleichförmigkeit der Änderungsbewegung gestellt, kann es beispielsweise von Nachteil sein, wenn unbeabsichtigte oder auch notwendige Lastwechsel auftreten, wie dies bei der Lageänderung eines auf einer Liegefläche verweilenden Benutzers der Fall ist. Die dadurch abtriebsseitig auf den Antrieb einwirkenden Kräfte können die Antriebsbewegung stören, da mit der Änderung der Stellgröße Geschwindigkeit keine Änderung der Regelgröße Spannung seitens der Netzversorgung einhergeht.

Der vorliegenden Erfindung liegt daher die Aufgabe zugrunde, eine Vorrichtung bereitzustellen, die die an einem Möbelantrieb auftretende, lastabhängige Störung kompensiert und eine sichere Ausführung der Bewegung gewährleistet.

Diese Aufgabe wird durch eine Spannungsversorgungsvorrichtung gelöst, die durch ein elektrisches Bauelement gekennzeichnet ist, das die Spannungsabgabe des Netzteils so regelt, dass seitens des Antriebs eine gleichförmige Bewegung erzeugbar ist.

Im Unterschied zu den bei anderen Antriebssytemen verwendeten Transformatoren kommt bei der erfindungsgemäßen Spannungsversorgungsvorrichtung als Schaltnetzteil vorzugsweise ein Serienresonanzwandler mit HF-Trenntransformator und beschränkter Glättung der Primärspannung zum Einsatz. Dadurch weist die Spannungsversorgungseinrichtung eine hohe Überlastfähigkeit und einen großen Abstand zwischen Primär- und Sekundärspannung auf. Darüber hinaus treten auch nur geringe Ableitströme auf, wodurch das Einhalten von Vorschriften zur elektromagnetischen Verträglichkeit vereinfacht wird. Durch diese Anordnung kann die erfindungsgemäße Spannungsversorgungseinrichtung durch eine geänderte Spannungsabgabe auf während des Betriebs des Antriebes auftretende Laständerungen reagieren und eine gleichförmige Bewegung beibehalten.

Weiter ist es von Vorteil, wenn bei einer solchen Spannungsversorgungsvorrichtung die Geschwindigkeit der gleichförmigen Bewegung durch eine Veränderung der Drehzahl des Gleichstrommotors manipulierbar ist, womit seitens des Benutzers die Geschwindigkeit an die jeweilige Situation angepasst werden kann. Dabei erlaubt die Regelung von Strom und Spannung eine optimale Anpassung an den Antrieb, so dass in unterschiedlichen Geschwindigkeitsbereichen konstante Geschwindigkeiten des Motors gefahren werden können.

Der Betrieb eines mit mehreren Antrieben ausgestatteten Möbels wird vorteilhaft dadurch gewährleistet, dass eine Spannungsabgabe an mehrere Antriebe gleichzeitig oder nacheinander möglich ist. Die Spannungsabgabe an einen der Antriebe erfolgt dabei zweckmäßigerweise unabhängig von einer zweiten oder weiteren.

Ferner ist es vorteilhaft, wenn bei einer erfindungsgemäßen Spannungsversorgungsvorrichtung der elektronische Baustein eine Steuer- und eine Speichereinrichtung aufweist. Während die Steuereinrichtung die Regelung des Antriebes übernimmt, werden in der Speichereinrichtung die für die Regelung des Antriebes notwendigen Parameter abgelegt. Zweckmäßigerweise sind die Steuer- und / oder die Speichereinrichtung dabei über eine Schnittstelle programmierbar und gestatten seitens eines Verwenders die Anpassung an die spezifische Gebrauchssituation. Neben verschiedenen Arten möglicher Regelungen ist es dabei besonders vorteilhaft, wenn in dem Speicherbaustein antriebsspezifische Kennlinien speicherbar sind. Auf eine höhere Belastung des Antriebes reagiert dieser durch eine erhöhte Leistungsaufnahme entsprechend der in der Speichereinrichtung abgelegten Kennlinie, die in weiten Bereichen linear verläuft. Darüber hinaus können in der Speichereinrichtung auch weitere Parameter, beispielsweise in Kurvenform, abgelegt werden, die ein sonst geräteseitig implementiertes sanftes Anfahren unterstützen, wie es beispielsweise bei der Bewegung einer Liegefläche erwünscht sein kann.

Insbesondere ist es von Vorteil, den elektronischen Baustein auf einer Leiterkarte unterzubringen. Diese Art der Unterbringung führt zu einem erheblich geringeren Bauvolumen und geht auch mit einer Gewichtsersparnis einher, so dass andere, kostengünstigere Aufbauten der Spannungsversorgung möglich werden, die auch besser an wachsende Erfordernisse geringeren Raumbedarfs anzupassen sind. Dem trägt ebenfalls Rechnung, dass bei der erfindungsgemäßen Spannungsversorgungsvorrichtung das Netzteil als Steckernetzteil zum direkten Anschluss an eine Netzspannung ausgelegt und der elektronische Baustein zweckmäßig mit dem Netzteil in einem gemeinsamen Gehäuse angeordnet ist. Daneben ist es aber auch denkbar, den Baustein anderweitig anzuordnen, etwa zusammen im Gehäuse mit einem Bodentrafo oder im Antriebsgehäuse selbst.

Im Sinne einer verbesserten Anpassung der Spannungsversorgung an an dem Antrieb auftretende Belastungen ist es von Nutzen, wenn der Antrieb eine Sensorik aufweist, die Veränderungen in der Antriebsbewegung in ein elektrisches Signal umwandelt und die seitens der Sensorik erzeugten Signale für den elektronischen Baustein als Regelparameter verwendbar sind. Das erzeugte elektrische Signal kann seitens des Netzteiles vorzugsweise als zusätzlicher, aber auch als ausschließlicher Parameter zur Regelung der Spannungsabgabe an den Antrieb verwendet werden und erleichtert so die schonendere Abstimmung von Spannungsversorgung und Antrieb bei geänderten Randbedingungen.

Praktischerweise kann eine erfindungsgemäße Spannungsversorgungsvorrichtung an unterschiedliche Spannungsquellen anschließbar sein, so dass der Antrieb des Möbels im wesentlichen unabhängig von der Art der Spannungsquelle betrieben werden kann.

Schließlich ist es zweckmäßig, wenn bei einer solchen Spannungsversorgungsvorrichtung der elektronische Baustein eine Schutzeinrichtung zur Abschaltung des Antriebes aufweist. So kann durch Verwendung einer Sicherung sichergestellt werden, dass bei einem Ausfall von Halbeleiterelementen oder der Überhitzung des Netzteiles der Antrieb sofort abgeschaltet wird. Ebenso wird die Anordnung einer Netzfreischaltung zwischen dem Netzanschluss den Sicherheitsanforderungen von Benutzern gerecht, denn auf diese Weise kann die gesamte Einrichtung für eine bestimmte Zeit spannungsfrei geschaltet werden. Die für eine Notbewegung vorzusehende Batterie, die einen Kondensator zur Schaltung eines Relais puffert, ist ebenfalls einfach an der vorgesehenen Anordnung unterzubringen.

Nachstehend wird eine Ausführungsform der erfindungsgemäßen Spannungsversorgungsvorrichtung anhand der Zeichnungsfigur näher erläutert.

Die Zeichnungsfigur zeigt ein Prinzipschaltbild mit Spannungsversorgung und Antrieben für Möbel.

In der Zeichnungsfigur ist ein Netzteil 6 dargestellt, welches eingangsseitig an einen 230V-Netzanschluß 2 angeschlossen ist. Zwischen dem Netzteil 6 und dem Netzanschluss 2 ist eine Netzfreischaltung 4 angeordnet, durch die das Netzteil mit den Antrieben 12, 14 spannungsfrei geschaltet werden kann.

Das Netzteil 6 ist in Form einer Leiterkarte zusammen mit einer zum Starten der Netzfreischaltung vorgesehenen 9V-Batterie in einem gemeinsamen Gehäuse 8 angeordnet, wobei die Batterie 8 außerhalb der Leiterplatte an die Gleichspannung angeschlossen ist. An der Leiterplatte ist ein nicht dargestellter ein elektronischer Baustein mit einer Steuer- und Speichereinrichtung angeordnet.

An den Ausgängen des Netzteils P, M1, M2 und S ist diese mit den Antrieben 12, 14 verbunden. Dabei handelt es sich bei dem Antrieb 12 um einen geregelten Antrieb, der über den positiven Anschluss P und den negativen Anschluss M1 an das Netzteil 6 angeschlossen ist, während der ungeregelte Antrieb 14 über die Anschlüsse P und M2 seitens des Netzteils 6 mit 30-50V-Gleichspannung versorgt wird. Darüber hinaus sind an den Antrieben nicht dargestellte Motorschalter angeordnet, die mit dem Schalter S über Dioden 16 verbunden sind.

### Bezugzeichenliste

- 2: Netzanschluss Wechselstromnetz
- 4: Netzfreischaltung
- 6: Schaltnetzteil
- 8: Gehäuse
- 10: Batterie
- 12: Antrieb, geregelt
- 14: Antrieb, ungeregelt
- 16: Diode
- P: positiver Ausgang des Netzteils
- M1: erster negativer Ausgang des Netzteils
- M2: zweiter negativer Ausgang des Netzteils
- S: Schalter

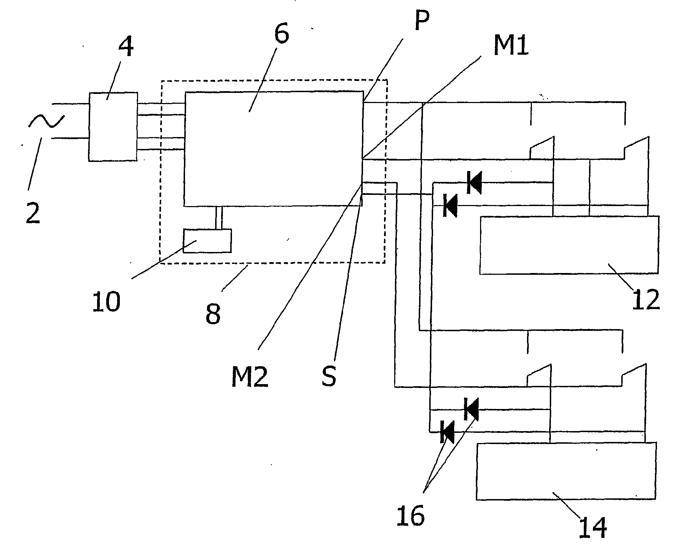

## Patentansprüche

1. Spannungsversorgungsvorrichtung zum Betrieb mindestens eines einem Antrieb für Möbel zugeordneten Gleichstrommotors, die ein Netzteil aufweist, **gekennzeichnet durch** einen elektronischen Baustein, der die Spannungsabgabe des Netzteils so regelt, dass seitens des Antriebs lastunabhängig eine gleichförmige Bewegung erzeugbar ist.

2. Spannungsversorgung nach Anspruch 1, **dadurch gekennzeichnet, dass** die Geschwindigkeit der gleichförmigen Bewegung durch eine Veränderung der Drehzahl des Gleichstrommotors manipulierbar ist.

3. Spannungsversorgung nach Anspruch 1 oder 2, **dadurch gekennzeichnet, dass** gleichzeitig die Spannungsabgabe an mehrere Antriebe regelbar ist.

4. Spannungsversorgungsvorrichtung nach Anspruch 3, **dadurch gekennzeichnet, dass** bei Spannungsabgabe an mehrere Antriebe die Spannungsabgabe an einen einzelnen Antrieb unabhängig von der Spannungsabgabe an die anderen Antriebe vorgesehen ist.

5. Spannungsversorgungsvorrichtung nach einem der Ansprüche 1 bis 4, **dadurch gekennzeichnet, dass** der elektronische Baustein eine Steuer- und eine Speichereinrichtung aufweist.

6. Spannungsversorgungsvorrichtung nach Anspruch 5, **dadurch gekennzeichnet, dass** die Steuer- und /oder die Speichereinrichtung über eine Schnittstelle programmierbar sind.

7. Spannungsversorgungsvorrichtung nach Anspruch 5 oder 6, **dadurch gekennzeichnet, dass** in der Speichereinrichtung antriebsspezifische Kennlinien speicherbar sind.

8. Spannungsversorgungseinrichtung nach einem der Ansprüche 1 bis 7, **dadurch gekennzeichnet, dass** der elektronische Baustein auf einer Leiterkarte untergebracht ist.

9. Spannungsversorgungsvorrichtung nach einem der Ansprüche 1 bis 8 , **dadurch gekennzeichnet, dass** das Netzteil ein Steckernetzteil ist.

10. Spannungsversorgungsvorrichtung nach einem der Ansprüche 1 bis 9 , **dadurch gekennzeichnet, dass** der elektronische Baustein mit dem Netzteil in einem gemeinsamen Gehäuse angeordnet ist.

11. Spannungsversorgungsvorrichtung nach einem der Ansprüche 1 bis 9, **dadurch gekennzeichnet, dass** der elektronische Baustein in einem gemeinsamen Gehäuse mit dem Antrieb oder in einem Bodentrafo angeordnet ist.

12. Spannungsversorgungsvorrichtung nach einem der Ansprüche 1 bis 10, **dadurch gekennzeichnet, dass** das Netzteil an unterschiedliche Spannungsquellen anschließbar ist.

13. Spannungsversorgungsvorrichtung nach einem der Ansprüche 1 bis 12, **dadurch gekennzeichnet, dass** der Antrieb eine Sensorik aufweist, die Veränderungen in der Antriebsbewegung in ein elektrisches Signal umwandelt.

14. Spannungsversorgungsvorrichtung nach Anspruch 13, **dadurch gekennzeichnet, dass** die seitens der Sensorik erzeugten Signale für den elektronischen Baustein als Regelparameter verwendbar sind.

15. Spannungsversorgungseinrichtung nach einem der Ansprüche 1 bis 14, **dadurch gekennzeichnet, dass** der elektronische Baustein eine Schutzeinrichtung zur Abschaltung des Antriebes aufweist.

16. Spannungsversorgungseinrichtung nach einem der Ansprüche 1 bis 15, **dadurch gekennzeichnet, dass** zwischen dem Netzanschluss und dem Netzteil eine Netzfreischaltung angeordnet ist.
